# DEMANDE DE BREVET EUROPEEN

(11) **EP 1 288 257 A1**
(43) Date de publication de la demande: **05.03.2003**
(21) Numéro de dépôt: 01203271.0
(22) Date de dépôt: 30.08.2001
(51) Int. Cl.: C08L 23/16, C08L 23/02, C08L 67/02, C08K 5/14, C08J 11/06

(54) **Procédé de fabrication d'articles en matières plastiques recyclées**

(71) Demandeur: Afi Finance International Holding S.A., 2213 Luxembourg (LU)
(72) Inventeur: Muller, Patrick, 57000 Metz (FR)
(74) Mandataire: Schmitz, Jean-Marie

(57) **Abrégé**

Procédé de fabrication d'articles en matières plastiques recyclées caractérisé en ce qu'il consiste à former un agglomérat en mélangeant des matières thermoplastiques avec un élastomère thermoplastique et un peroxyde de 8,8'-dicuményle à une température comprise entre 110°C et 125°C pour fabriquer par transformation des articles en matières plastiques recyclées.

## Description

La présente invention concerne un procédé de fabrication d'articles en matières plastiques recyclées selon le préambule de la revendication 1 et son utilisation.

Ces derniers temps le recyclage des déchets plastiques, tels que les bouteilles usagées, les sacs plastiques, les couches culottes a pris une importance considérable.

Le procédé de fabrication d'articles en matières plastiques recyclées est défini dans la partie caractérisante de la revendication 1.

La présente invention vise un procédé de fabrication d'articles en matières plastiques recyclées consistant à former un agglomérat en mélangeant des matières thermoplastiques avec un élastomère thermoplastique et un peroxyde de 8,8'-dicuményle à une température comprise entre 110°C et 125°C pour fabriquer par transformation (moulage par injection, ou intrusion, ou rotation) divers produits en matières plastiques à partir de matières plastiques recyclées ou recyclables.

L'invention est applicable à la fabrication des pare-chocs de véhicules terrestres (automobiles), aériens (avions), et nautiques (bateaux), des bassins décoratifs de jardin, des bacs à poissons, de piscines, des caillebotis, des récupérateurs d'eau, des pots de fleurs, des poubelles, des jerricanes, des jouets, des meubles de jardin, des conteneurs industriels, des protections de câbles, des tuyaux, des clôtures, des séparateurs de trafic routier du type glissière de sécurité pouvant êtres naturellement de toute dimension, en particulier de dimensions normalisées.

L'utilisation ne se limite pas uniquement à la fabrication des articles énumérés précédemment mais elle couvre aussi toutes les variations de ces articles. Ces applications ne doivent en aucun cas être considérées comme limitatives de la présente invention.

Cette matière plastique peut être un mélange de polyoléfines et/ou de polyoléfines et de PET provenant de déchets recyclés ou recyclables (bouteilles, sacs, couches culottes, etc...). On a trouvé de façon surprenante, qu'en ajoutant aux matières thermoplastiques constituées par ces déchets, un additif constitué par un élastomère thermoplastique (un ter-monomère diénique d'éthylène et de propylène, mentionné sous forme de t-MDEP), à titre d'exemple : le produit vendu sous la marque « Santoprène™ », on permet d'apporter à l'article de meilleures caractéristiques mécaniques notamment à la torsion, à la flexion, à la tenue aux chocs et à la résistance mécanique au froid. Cet additif joue le rôle d'un liant qui renforce la liaison et la cohésion des plastiques hétérogènes n'ayant pas à priori de possibilité de liaison moléculaire. En plus, cet additif ne nécessite pas de traitement préalable à l'injection pour être mélangé à la matière première.

Les articles en matières plastiques de la présente invention sont réalisables, par transformation (injection dans un moule, ou intrusion, ou rotation) à partir d'un mélange approprié de polyoléfines, par exemple un mélange de polypropylène et de polyéthylène provenant de déchets recyclés ou recyclables.

L'avantage du procédé de la présente invention est que l'on obtient des articles recyclés ou recyclables en matières plastiques résistants aux chocs et au froid et particulièrement légers.

Dans le cadre d'utilisation de cette famille d'élastomères, il est également à noter que des produits non compatibles tels que : des mélanges de polyoléfines ou des mélanges de polyoléfines et PET peuvent être utilisés pour la réalisation des articles en matière plastique. Dans ce contexte, le PET jouant non seulement le rôle de charge jusqu'à 30 % en poids mais aussi un rôle de renforcement.

En terme de procédé d'utilisation de mélanges, il est possible de ne pas fonctionner selon le système traditionnel connu sous le nom anglais « compoundage ».

Cet additif peut être directement mélangé et introduit dans la presse pour être injecté immédiatement. Une telle méthode a surtout pour avantage de limiter la dégradation des matières thermoplastiques en évitant leur chauffe et ceci, dans le cadre de mélanges tel que le « compoundage ».

Le procédé selon l'invention contribue au recyclage à bon marché des déchets plastiques.

Comme indiqué plus haut, une charge à base de PET peut être utilisée pour constituer la matière thermoplastique. Ainsi des balles de bouteilles usagées en PET comportant éventuellement les bouchons en une autre matière thermoplastique, par exemple du polypropylène, ainsi que les étiquettes et la colle, sont mises dans un déchiqueteur permettant de broyer l'ensemble pour obtenir des paillettes d'une dimension homogène comprise entre 7 et 9 mm, de préférence 8 mm de longueur. Les bouteilles en PET peuvent être compactées ou non et il n'est pas nécessaire de les laver ni de les sécher.

Les paillettes sont ensuite placées dans un microniseur, par exemple un microniseur vertical du type assiette tournante, pour être transformées en fines fibres d'une longueur allant de 2 à 4 mm, de préférence 3 mm et d'un diamètre entre 45 et 55 microns, de préférence 50 microns. Ces fines fibres ont la propriété de pouvoir s'entremêler naturellement. Pour pouvoir utiliser ce produit à base de fibres sous forme de « compound », il est important d'éviter de ramollir le PET par chauffage pour conserver sa caractéristique fibreuse. Les mélanges utilisant le PET sous forme de fibres jusqu'à 30% seront de préférence réalisés par un procédé d'agglomération ou de compactage à basse température, c'est-à-dire à une température comprise entre 110°C et 125°C, de préférence 120°C. Pour que le mélange ne soit pas trop rigide et cassant et pour conférer une bonne tenue aux chocs comme indiqué plus haut, on ajoutera à ces mélanges une faible quantité d'élastomère thermoplastique. La densité de l'agglomérat est comprise entre 0,4 et 0,7, de préférence 0,5. Lors de la transformation et pour ne pas détruire la structure fibreuse du PET, on travaillera à des températures comprises entre 170°C et 190°C, de préférence 180°C, c'est à dire à des températures inférieures aux températures de ramollissement du PET. On utilise comme agent fluidifiant le peroxyde de 8,8'-dicuményle pour rendre le mélange suffisamment fluide ou transformable. Ce peroxyde de 8,8'-dicuményle est introduit dans l'étape d'agglomération ou de compactage, à une température comprise entre 110°C et 125°C, de préférence 120°C et il devient actif dans l'étape de transformation qui se déroule à une température comprise entre 170°C et 190°C, de préférence 180°C.

## Revendications

1. Procédé de fabrication d'articles en matières plastiques recyclées **caractérisé en ce qu'**il consiste à former un agglomérat en mélangeant des matières thermoplastiques avec un élastomère thermoplastique et un peroxyde de 8,8'-dicuményle à une température comprise entre 110°C et 125°C pour fabriquer par transformation des articles en matières plastiques recyclées.

2. Procédé selon la revendication 1 **caractérisé en ce que** la transformation consiste en un moulage par injection, ou une intrusion ou une rotation.

3. Procédé selon la revendication 1 **caractérisé en ce qu'** on utilise un ter-monomère diénique d'éthylène et de propylène comme élastomère thermoplastique.

4. Procédé selon la revendication 1, **caractérisé en ce que** le peroxyde de 8,8'-dicuményle est actif à une température comprise entre 170°C et 190°C.

5. Procédé selon la revendication 1 **caractérisé en ce que** la matière thermoplastique est un mélange de polyoléfines ou de polyoléfines et de PET.

6. Procédé selon la revendication 1, **caractérisé en ce que** la matière thermoplastique provient de déchets en matières plastiques recyclées.

7. Procédé selon la revendication 1, **caractérisé en ce que** la densité de l'agglomérat est comprise entre 0,4 et 0,7.

8. Procédé selon la revendication 6, **caractérisé en ce que** le PET provient de bouteilles usagées en PET qui sont broyées dans un déchiqueteur pour obtenir des paillettes de PET lesquelles sont ensuite transformées dans un microniseur en fines fibres d'une longueur allant jusqu'à 3 mm et d'un diamètre de l'ordre de 50 microns.

9. Procédé selon la revendication 9, **caractérisé en ce que** les paillettes possèdent une longueur comprise entre 7 mm et 9 mm avant d'être introduite dans le microniseur.

10. Procédé selon la revendication 9, **caractérisé en ce que** les paillettes possèdent une longueur comprise entre 4 mm et 6 mm et un diamètre compris entre 45 et 55 microns après transformation dans le microniseur.

11. Articles en matières plastiques recyclées susceptibles d'être obtenus par le procédé selon la revendication 1.

12. Utilisation de matières thermoplastiques mélangées avec un élastomère thermoplastique et un peroxyde de 8,8'-dicuményle pour fabriquer par transformation (injection dans un moule, intrusion, rotation) des articles en matières plastiques recyclées tels que des pare-chocs de véhicules terrestres, aériens, et nautiques, des bassins décoratifs de jardin, des bacs à poissons, des piscines, des caillebotis, des récupérateurs d'eau, des pots de fleurs, des poubelles, des jerricanes, des jouets, des meubles de jardin, des conteneurs industriels, des protections de câbles, des tuyaux, des clôtures, des séparateurs de trafic routier du type glissière de sécurité.
